# FASCICULE DE BREVET EUROPEEN

(11) **EP 3 713 870 B1**
(45) Date de publication et mention de la délivrance du brevet: **01.05.2024**
(21) Numéro de dépôt: 18867317.2
(22) Date de dépôt: 08.11.2018
(51) Int. Cl.: C01B 3/50, C01B 3/56, C01B 3/48, C01B 3/36, C01B 3/38, C01B 32/50, F25J 3/02

(54) **PROCÉDÉ ET APPAREIL POUR LA PRODUCTION COMBINÉE D'HYDROGÈNE ET DE DIOXYDE DE CARBONE À PARTIR D'UN MÉLANGE D'HYDROCARBURES**
VERFAHREN UND VORRICHTUNG ZUR KOMBINIERTEN HERSTELLUNG VON WASSERSTOFF UND KOHLENDIOXID AUS EINEM KOHLENWASSERSTOFFGEMISCH
PROCESS AND DEVICE FOR THE COMBINED PRODUCTION OF HYDROGEN AND CARBON DIOXIDE FROM A HYDROCARBON MIXTURE

(30) Priorité: 22.11.2017 FR 1761066
(43) Date de publication de la demande: 30.09.2020
(73) Titulaire: L'AIR LIQUIDE, Société Anonyme pour l'Etude et l'Exploitation des Procédés Georges Claude, 75007 Paris (FR)
(72) Inventeur: TRANIER, Jean-Pierre, 78350 Les Loges-En-Josas (FR)
(74) Mandataire: Air Liquide
(86) Numéro de dépôt international: PCT/FR2018/052774
(87) Numéro de publication internationale: WO 2019/102094

(56) Documents cités:
- EP-A1- 2 141 119
- EP-A1- 2 873 939
- WO-A1-2010/086635
- FR-A1- 2 953 505

## Description

La présente invention concerne un procédé pour la production combinée d'hydrogène et de dioxyde de carbone à partir d'un mélange d'hydrocarbures dans lequel le mélange d'hydrocarbures est reformé pour produire un gaz de synthèse contenant de l'hydrogène, du monoxyde de carbone, du dioxyde de carbone et au moins un hydrocarbure qui est refroidi, puis enrichi en hydrogène (H₂) et dioxyde de carbone (CO₂), optionnellement séché, et traité dans une unité d'adsorption en modulation de pression (PSA) de purification d'hydrogène pour produire de l'hydrogène (le séchage pouvant précéder ou suivre la purification), le résiduaire étant traité en vue de capturer du CO₂. Elle concerne aussi une installation apte à la mise en oeuvre du procédé.

Le changement climatique étant l'un des grands problèmes environnementaux actuels, diminuer les émissions de gaz à effet de serre, et tout particulièrement diminuer les émissions de CO₂ est un des grands défis qui s'imposent à l'homme. Or l'une des sources essentielles d'émissions de CO₂ est la combustion des combustibles fossiles.

Parmi les installations industrielles émettrices de dioxyde de carbone, on trouve notamment les installations de production d'hydrogène et de monoxyde de carbone qui émettent du dioxyde de carbone via leurs fumées, le CO₂ contenu dans les fumées provenant de la combustion de gaz non valorisables générés dans le procédé et recyclés sous forme de combustibles, et de celle de combustibles additionnels tels que le naphta et le gaz naturel. La capture de CO₂ sur ces installations s'effectue à la fois sur le CO₂ présent dans des fumées de combustion, mais aussi sur le CO₂ présent dans le gaz de synthèse produit par le procédé. Parmi les méthodes de capture du dioxyde de carbone présent dans le gaz de synthèse - c'est-à-dire produit lors du reformage ou obtenu par transformation ultérieure du gaz de synthèse - l'une des méthodes utilisées est la capture du dioxyde de carbone par compression et refroidissement du gaz résiduaire issu de l'unité de purification d'hydrogène par adsorption à modulation de pression (PSA H₂), de sorte à liquéfier une fraction du dioxyde de carbone contenu dans ledit gaz résiduaire.

Ce dioxyde de carbone liquide peut ensuite être transporté, stocké, transformé ou utilisé en fonction des besoins. Il est souhaitable pour l'exploitant de l'installation de valoriser les gaz non condensés issus de cette opération de capture de CO₂ par compression et purification ou CPU (de l'anglais « compression and purification unit »).

Il est ainsi connu de WO2006/054008 un procédé de production d'hydrogène dans lequel la capture de dioxyde de carbone permet en outre d'augmenter la production d'hydrogène de l'installation. Pour cela, le procédé met en oeuvre des étapes de compression du gaz résiduaire du PSA, suivi d'une étape de séchage (le séchage pouvant, ainsi que décrit dans WO2008/017783, être réalisé en amont du PSA) avec récupération du dioxyde de carbone via une unité de purification cryogénique (CPU). Les gaz incondensables issus de la CPU sont traités par une membrane permettant à l'hydrogène de perméer. L'hydrogène est renvoyé en amont du procédé, à l'entrée du PSA pour augmenter la production d'hydrogène de l'installation, le gaz résiduel issu de la membrane étant quant à lui utilisé dans l'étape de reformage, comme combustible et/ou comme charge destinée à alimenter le reformage.

Cependant, lorsque l'on souhaite produire du CO₂ de qualité alimentaire, il faut également veiller à éliminer un certain nombre d'impuretés présentes dans le gaz résiduaire issues de l'unité de purification hydrogène (PSA H₂). Pour les impuretés légères (méthane, monoxyde de carbone, azote, hydrogène, argon), on peut procéder par distillation tel que décrit dans WO2006/054008.

Mais, si la teneur en éthane est élevée dans le gaz résiduaire, il faudra augmenter considérablement le rebouillage de cette colonne pour atteindre une teneur finale de quelques ppm par comparaison à un cas où l'on n'éliminerait dans cette colonne que les impuretés légères de type méthane, monoxyde de carbone, azote, hydrogène ou argon, ce qui signifie une augmentation significative de la consommation énergétique de l'unité.

Pour les impuretés lourdes, le même document propose de procéder à une étape d'élimination d'impuretés lourdes par adsorption préalablement à l'étape de condensation partielle du gaz résiduaire. Malheureusement, il n'existe pas de système d'adsorption réellement efficace et économique pour éliminer un constituant tel que le propane, comme il n'en existe pas non plus pour l'éthane.

Une autre solution consisterait à revaporiser le liquide produit riche en CO₂ résultant de la condensation partielle du gaz résiduaire, à le réchauffer à une température de l'ordre de 400 à 500°C, à injecter de l'oxygène et à procéder à une oxydation catalytique pour éliminer notamment des hydrocarbures tels que l'éthane et le propane, puis à refroidir et liquéfier ce CO₂, à procéder à une nouvelle distillation pour éliminer l'oxygène de manière à produire du dioxyde de carbone liquide de qualité alimentaire qui peut ensuite être transporté et stocké. Mais cette autre solution est à la fois coûteuse et complexe.

Selon le procédé d'EP2141119, on doit recomprimer le CO₂ à la sortie de la membrane, alors que selon l'invention, on conserve une pression très élevée côté perméat qui est compatible avec une condensation du CO₂ dans la CPU. Dans EP2141119, le perméat est proche de la pression atmosphérique, ce qui ne permet pas de le condenser directement puisque le CO₂ ne peut être à l'état liquide qu'à une pression supérieure à 519 kPa c'est à dire 5,19 bar abs ou 0,519 MPa.

L'objectif de la présente invention est donc de répondre au besoin de produire du CO₂ de qualité alimentaire sans complexifier outre mesure l'installation. Elle consiste à installer une étape de séparation par membrane dont on récupérera un perméat enrichi en hydrogène et dioxyde de carbone où les quantités d'impuretés notamment l'éthane, l'éthylène, le propane et le propène sont considérablement réduites. Bien que cette opération réduise la pression partielle de CO₂ dans le gaz faisant l'objet de la condensation partielle, elle permet de simplifier le procédé. Par ailleurs, les incondensables issus de la condensation partielle sont plus riches en hydrogène et ils n'ont pas besoin d'être purifié par une membrane. Ils peuvent être directement recyclés à l'amont du PSA H₂ pour augmenter la production d'hydrogène de l'unité.

Dans certains cas, il peut être nécessaire de produire du dioxyde de carbone de qualité alimentaire, ayant par exemple une pureté minimale de 99,8%.

FR-A2953505 décrit un procédé de production combinée d'hydrogène et de dioxyde de carbone à partir d'un mélange d'hydrocarbures dans lequel le mélange d'hydrocarbures est reformé pour produire un gaz de synthèse qui est refroidi, puis enrichi en H₂ et CO₂, optionnellement séché, et traité dans une unité PSA de purification d'hydrogène pour produire de l'hydrogène, le résiduaire du PSA étant traité en vue de capturer du CO₂ et de fournir un résiduaire. Ce résiduaire est de nouveau traité pour fournir un flux enrichi en H₂ et CO₂ qui sera renvoyé vers le PSA ; il y constitue une deuxième charge distincte de la charge principale.

Selon un objet de l'invention, il est prévu un procédé selon la revendication 1 Selon d'autres étapes facultatives :
- il n'y a aucune étape de compression du perméat entre les étapes (h) et (i).
- le non-perméat de l'étape (h) est séparé dans un deuxième système membranaire.
- le non-perméat de l'étape (h) est partiellement condensé.
- au moins une partie du non-perméat de l'étape (h) ou un gaz dérivé de ce non-perméat est envoyé à l'étape de reformage ou d'oxydation partielle, comme carburant pour un brûleur de cette étape.
- au moins une partie du non-perméat de l'étape (h) ou un gaz dérivé de ce non-perméat est envoyé à l'étape de reformage ou d'oxydation partielle comme gaz d'alimentation.
- le premier et/ou deuxième système membranaire élimine au moins l'un des hydrocarbures suivants : éthane, propane, éthylène, propène, benzène, méthanol de sorte qu'au moins 80%, voire au moins 90% de l'au moins un hydrocarbure alimentant le système membranaire se retrouve dans le non perméat du premier et /ou deuxième système membranaire.
- le procédé peut comprendre une étape de compression dans un compresseur en amont du premier système membranaire.
- un fluide dérivé du non perméat du premier système membranaire est recyclé en amont du compresseur.
- le flux liquide riche en CO₂ obtenu est de qualité alimentaire.

L'invention porte également sur un appareil selon la présente revendication 10. L'appareil peut comprendre :
- un deuxième système membranaire dans lequel le non-perméat du premier système membranaire est séparé,
- des moyens pour condenser partiellement le non-perméat du premier système membranaire,
- des moyens pour envoyer au moins une partie du non-perméat du premier système membranaire ou un gaz (26) dérivé de ce non-perméat à un appareil de reformage ou d'oxydation partielle.

D'autres caractéristiques et avantages de la présente invention apparaîtront à la lecture de la description ci-après qui décrit des exemples de mise en oeuvre non limitatifs, descriptions faites en référence aux figures annexées dans lesquelles :
- La Figure 1 est une vue schématique d'un procédé pour la production combinée d'hydrogène et de dioxyde de carbone telle que décrite dans WO2006/054008 (état de l'art).
- La Figure 2 est une vue schématique d'un procédé pour la production combinée d'hydrogène et de dioxyde de carbone selon une configuration de base de l'invention.
- La Figure 3 est une vue schématique d'un procédé selon l'invention qui diffère de celui de la Figure 2 en ce qu'un deuxième étage de membrane permet d'améliorer la récupération d'hydrogène et de dioxyde de carbone.
- La Figure 4 est une vue schématique d'un procédé selon l'invention qui diffère de celui de la Figure 2 en ce qu'une deuxième condensation partielle et un deuxième étage de membrane permet d'améliorer encore plus la récupération d'hydrogène et de dioxyde de carbone du gaz. On a représenté également le cas où la fraction riche en hydrogène est purifiée dans un PSA H₂ indépendant de manière à éviter une modification supplémentaire de l'unité initiale en cas de rénovation.

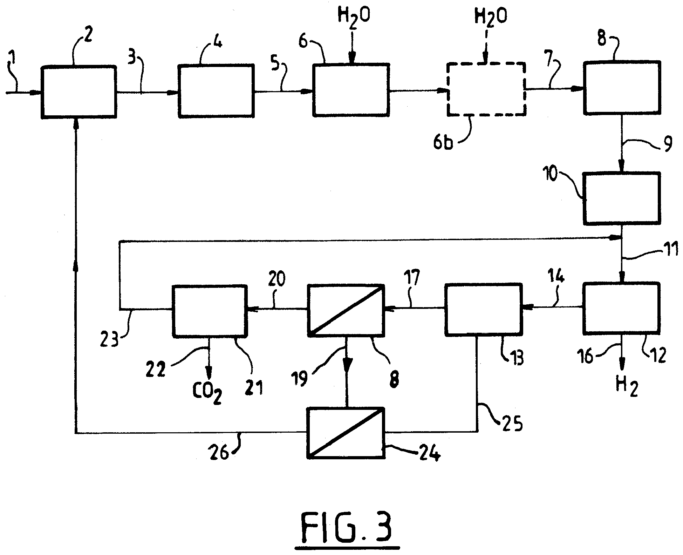

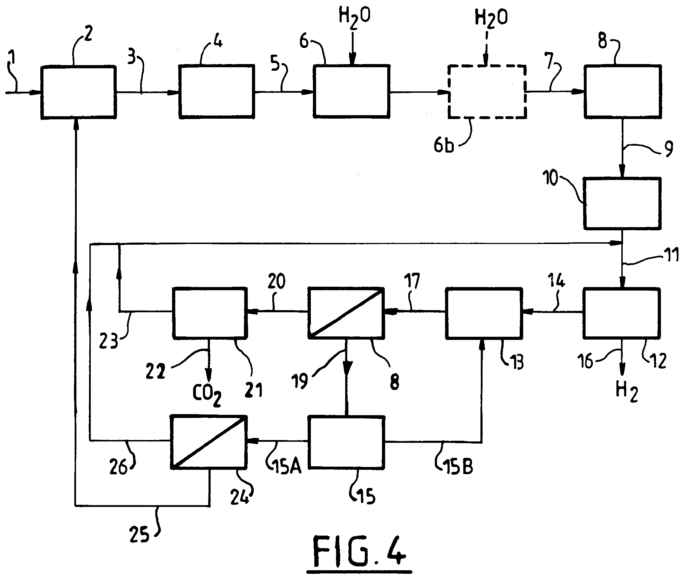

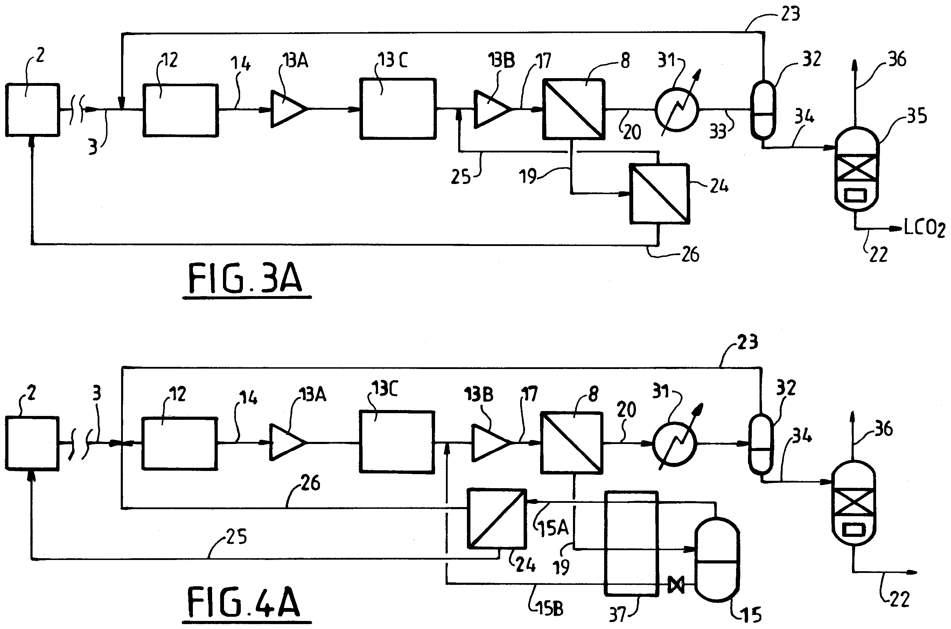

- Les Figures 3A et 4A montrent en plus de détail la dernière partie des procédés respectifs des Figures 3 et 4.

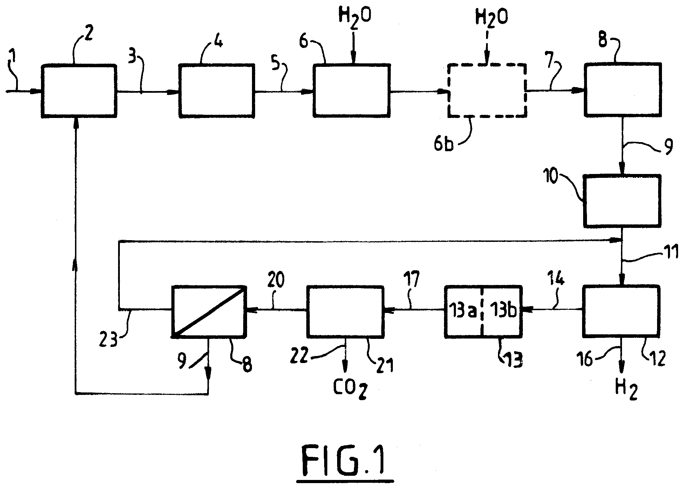

La Figure 1 décrit l'état de l'art dans lequel une charge d'hydrocarbures 1 mélangée à de la vapeur d'eau (non représentée) alimente un reformeur 2 pour générer un gaz de synthèse 3 contenant au moins du monoxyde de carbone, de l'hydrogène, du dioxyde de carbone, du méthane n'ayant pas réagi et des impuretés. Cette étape de reformage à la vapeur est réalisée dans un four de vapo-reformage contenant des tubes remplis de catalyseurs, la chaleur nécessaire au reformage étant apportée par combustion.

Le gaz de synthèse 3 est alors refroidi en 4, le gaz de synthèse refroidi 5 étant ensuite soumis en 6 à une réaction de shift durant laquelle le monoxyde de carbone réagit avec de l'eau (représentée mais non référencée) pour être - pour partie - transformé en hydrogène et dioxyde de carbone. La réaction mise en jeu (CO + H₂O -> CO₂ + H₂) est appelée réaction de gaz à l'eau ou réaction de shift. Cette réaction de conversion est en général conduite sur le gaz de synthèse à haute température (HT shift) ou à moyenne température (MT shift), une seconde étape 6b de shift peut être réalisée en aval de la précédente, sur le gaz de synthèse partiellement converti, à température plus basse (en anglais « low température shift ») - cette seconde étape de conversion 6b est représentée en traits discontinus, elle n'est pas obligatoire. Le gaz de synthèse obtenu 7 - en sortie de l'étape 6 ou de l'étape 6b lorsque l'étape 6 est suivie d'une étape 6b - est enrichi en H₂ et CO₂ et appauvri en CO ; il est refroidi en 8, puis le gaz refroidi 9 est séché en 10 (par exemple en utilisant un procédé d'adsorption type TSA) pour éliminer les molécules d'eau et obtenir ainsi un mélange gazeux 11 sec - eu égard au traitement aval du gaz - lequel mélange gazeux sec est ensuite soumis à une étape de séparation dans une unité 12 d'adsorption par modulation de pression ou PSA H₂ pour produire un courant gazeux 16 d'hydrogène produit et un courant gazeux 14 de résiduaire de PSA (résiduaire Rpsa). Le courant 14 est ensuite traité pour en capturer le dioxyde de carbone ; pour cela, il est comprimé (sous-étape 13a) de telle sorte que sa pression soit comprise entre 20 et 100 bar et il subit une sous-étape 13 b de purification par adsorption de manière à éliminer certaines impuretés lourdes comme le benzène ou le méthanol.

Ensuite, il subit une ou plusieurs étapes successives de condensation/séparation dans l'unité CPU 21 pour obtenir un flux liquide 22 enrichi en CO₂, et un courant gazeux 20 (résiduaire RI), enrichi en hydrogène et en autres constituants incondensables, notamment en monoxyde de carbone et méthane. Le courant 20 est ensuite soumis à une étape de séparation dans une unité 8 de perméation au travers d'une membrane pour produire un courant gazeux 23 (perméat) enrichi en hydrogène (flux Hii) et un courant gazeux 19 enrichi en monoxyde de carbone et en méthane. Ce courant gazeux 19 pourra par exemple être envoyé en tant que combustible vers le reformeur 2. Le séchage du gaz de synthèse, en amont et/ou en aval du PSA (non représenté) permet d'éliminer l'eau nuisible au bon déroulement du procédé aval.

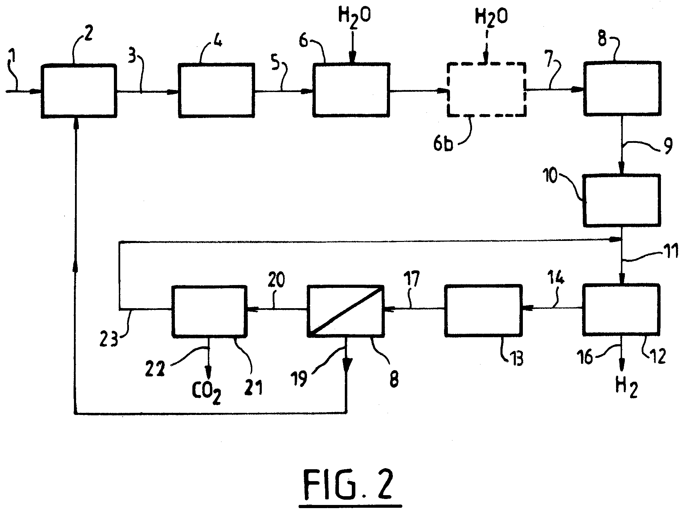

Dans la Figure 2, selon l'invention, une charge d'hydrocarbures 1 mélangée à de la vapeur d'eau (non représentée) alimente un reformeur 2 pour générer un gaz de synthèse 3 contenant au moins du monoxyde de carbone, de l'hydrogène, du dioxyde de carbone, du méthane n'ayant pas réagi et des impuretés dont au moins des hydrocarbures suivants : éthane, propane, éthylène, propène.

Cette étape de reformage à la vapeur est réalisée dans un four de vapo-reformage contenant des tubes remplis de catalyseurs, la chaleur nécessaire au reformage étant apportée par combustion. Le gaz de synthèse 3 est alors refroidi en 4, le gaz de synthèse refroidi 5 étant ensuite soumis en 6 à une réaction de shift durant laquelle le monoxyde de carbone réagit avec de l'eau (représentée mais non référencée) pour être - pour partie - transformé en hydrogène et dioxyde de carbone. La réaction mise en jeu (CO + H₂O -> CO₂ + H₂) est appelée réaction de gaz à l'eau ou réaction de shift. Cette réaction de conversion est en général conduite sur le gaz de synthèse à haute température (HT shift) ou à moyenne température (MT shift), une seconde étape 6b de shift peut être réalisée en aval de la précédente, sur le gaz de synthèse partiellement converti, à température plus basse (en anglais « low température shift ») - cette seconde étape de conversion 6b est représentée en traits discontinus, elle n'est pas obligatoire.

Le gaz de synthèse obtenu 7 - en sortie de l'étape 6 ou de l'étape 6b lorsque l'étape 6 est suivie d'une étape 6b - est enrichi en H₂ et CO₂ et appauvri en CO ; il est refroidi en 8, puis le gaz refroidi 9 est séché en 10 (par exemple en utilisant un procédé d'adsorption type TSA) pour éliminer les molécules d'eau et obtenir ainsi un mélange gazeux 11 sec - eu égard au traitement aval du gaz - lequel mélange gazeux sec est ensuite soumis à une étape de séparation dans une unité 12 d'adsorption par modulation de pression ou PSA H₂ pour produire un courant gazeux 16 d'hydrogène produit et un courant gazeux 14 de résiduaire de PSA (résiduaire Rpsa). Le courant 14 est ensuite traité pour en capturer le dioxyde de carbone ; pour cela, il est comprimé dans un compresseur 13 de telle sorte que sa pression soit comprise entre 20 et 100 bar pour produire le gaz 17. Il peut subir une sous-étape de purification par adsorption de manière à éliminer certaines impuretés lourdes comme le benzène ou le méthanol. Ensuite, il est séparé dans un système membranaire 8 pour produire un perméat 20 enrichi en dioxyde de carbone et en hydrogène et un non-perméat appauvri en dioxyde de carbone et en hydrogène et contenant au moins 90% de l'au moins un hydrocarbure présent dans le gaz 17. Le perméat 20, ayant une pression partielle en CO₂ d'au moins 519 kPa, n'est pas comprimé et subit une ou plusieurs étapes successives de condensation/séparation dans l'unité CPU 21 pour obtenir un flux liquide 22 enrichi en CO₂, et un courant gazeux 23, enrichi en hydrogène et en autres constituants incondensables, notamment en monoxyde de carbone et méthane. Le courant 23 est renvoyé à l'unité d'adsorption 12 pour le séparer avec le gaz 11.

Le non-perméat 19 enrichi en au moins l'un des hydrocarbures suivants : éthane, propane, éthylène, propène et appauvri en dioxyde de carbone et en hydrogène est envoyé comme combustible au four 2.

La membrane du système membranaire 17 peut fonctionner entre la température ambiante de 100°C, de préférence aux alentours de 80°C, par exemple entre 70 et 90°C. La membrane peut être une membrane polymérique capable de séparer l'hydrogène pouvant être un polyamide, polyaramide, polybenzimidazoles, mélange de polybenzimidazole et polyimdes.

Dans la Figure 3, seules les différences avec la Figure 2 seront décrites. Le non-perméat 19 du premier système membranaire 17 est envoyé à un deuxième système membranaire 24. Le non-perméat 19 enrichi en au moins l'un des hydrocarbures suivants : éthane, propane, éthylène, propène et appauvri en dioxyde de carbone et en hydrogène se sépare dans le deuxième système membranaire 24.

Le perméat 25 du deuxième système membranaire 24 enrichi en CO₂ par rapport au non-perméat 19 est renvoyé à l'étape d'absorption 13. Le non-perméat 26 du deuxième système membranaire 24 envoyé au reformage 2.

A la Figure 3A, les étapes de traitement 4, 6, 8 et 10 de la Figure 3 sont omises : par contre les étapes 12 à 24 sont illustrées en plus de détail.

Après l'étape d'adsorption dans l'unité 12 produisant de l'hydrogène 16 et un débit 14 appauvri en hydrogène, le débit 14 est comprimé par le compresseur 13A, épuré en eau (cas où le séchage est en aval du PSA) et/ou en méthanol et/ou en benzène dans l'adsorbeur 13C et comprimé de nouveau par le compresseur 13B. Le débit 17 produit par le compresseur 13B est séparé pour produire un débit 20 enrichi en CO₂ et appauvri en au moins un hydrocarbure 20. Le débit 20 est refroidi par le refroidisseur 31, le débit refroidi 33 est partiellement condensé et séparé dans un séparateur de phases 32 dont le gaz 23 est renvoyé à l'adsorption 12. Le liquide 34 est séparé par distillation dans une colonne de distillation 35 pour produire un gaz 36 et un liquide riche en dioxyde de carbone 22. Le non-perméat 19 du premier système membranaire 8 est envoyé à un deuxième système membranaire 24 dont le perméat 25 est envoyé en amont du compresseur 13B et le non-perméat 26 est envoyé au reformeur 2.

Le tableau suivant montre des données pour le procédé des Figures 3 et 3A.

**Tableau 1**

| Figure 3 | Membrane 8 | | | | Membrane 24 | | |
|---|---|---|---|---|---|---|---|
| Nom | 17 | 19 | 20 | | 19 | 26 | 25 |
| Vapeur | 1 | 1 | 1 | | 1 | 1 | 1 |
| Température [C] | 82,00 | 79,22 | 80,93 | | 79,22 | 67,42 | 75,22 |
| Pression [bar] | 47,30 | 45,79 | 25,60 | | 45,79 | 45,50 | 9,89 |
| Débit Molaire [Nm3/h*] | 31426 | 17346 | 14080 | | 17346 | 5943 | 11403 |
| Débit Massique [kg/h] | 41173 | 22560 | 18614 | | 22560 | 6504 | 16056 |

| Concentration Molaire | | | | | | | |
|---|---|---|---|---|---|---|---|
| CO₂ | 0,53941269 | 0,47232622 | 0,62206223 | | 0,47232622 | 0,16488324 | 0,63257652 |
| Azote | 8,09E-03 | 1,28E-02 | 2,28E-03 | | 1,28E-02 | 2,77E-02 | 5,02E-03 |
| CO | 0,10764726 | 0,16048029 | 4,26E-02 | | 0,16048029 | 0,3140941 | 8,04E-02 |
| Hydrogène | 0,22444731 | 0,15521411 | 0,3097416 | | 1,55E-01 | 1,59E-02 | 2,28E-01 |
| Méthane | 0,12034078 | 0,19906286 | 2,34E-02 | | 1,99E-01 | 4,77E-01 | 5,42E-02 |
| Ammoniac | 3,21E-10 | 2,42E-10 | 4,20E-10 | | 2,42E-10 | 4,07E-11 | 3,46E-10 |
| Ethane | 4,66E-05 | 8,28E-05 | 1,99E-06 | | 8,28E-05 | 2,32E-04 | 5,02E-06 |
| Ethylène | 2,87E-06 | 4,72E-06 | 5,97E-07 | | 4,72E-06 | 1,11E-05 | 1,37E-06 |
| Propane | 3,86E-06 | 6,97E-06 | 3,37E-08 | | 6,97E-06 | 2,02E-05 | 8,64E-08 |
| Propène | 2,16E-06 | 3,88E-06 | 3,60E-08 | | 3,88E-06 | 1,12E-05 | 9,19E-08 |
| Méthanol | 1,10E-05 | 1,93E-05 | 7,83E-07 | | 1,93E-05 | 5,27E-05 | 1,94E-06 |
| Benzène | 9,57E-09 | 1,73E-08 | 3,29E-11 | | 1,73E-08 | 5,04E-08 | 8,44E-11 |

| Produits | | Résidus (%) | Perméats (%) | | | Résidus (%) | Perméats (%) |
|---|---|---|---|---|---|---|---|
| CO₂ | | 48,33 | 51,67 | | | 11,96 | 88,04 |
| Azote | | 87,37 | 12,63 | | | 74,21 | 25,79 |
| CO | | 82,29 | 17,71 | | | 67,06 | 32,94 |
| Hydrogène | | 38,17 | 61,83 | | | 3,52 | 96,48 |
| Méthane | | 91,30 | 8,70 | | | 82,11 | 17,89 |
| Ammoniac | | 41,50 | 58,50 | | | 5,78 | 94,22 |
| Ethane | | 98,08 | 1,92 | | | 96,02 | 3,98 |
| Ethylène | | 90,68 | 9,32 | | | 80,85 | 19,15 |
| Propane | | 99,61 | 0,39 | | | 99,19 | 0,81 |
| Propène | | 99,25 | 0,75 | | | 98,44 | 1,56 |
| Méthanol | | 96,82 | 3,18 | | | 93,39 | 6,61 |
| Benzène | | 99,85 | 0,15 | | | 99,68 | 0,32 |

Ainsi nous constatons que plus que 90% du méthane, de l'éthylène et du méthanol dans le débit 17 et plus que 98% de l'éthane, du propane, du propène et du benzène dans le débit 17 se retrouve dans le non-perméat 19 du premier système membranaire 8.

Le deuxième système membranaire 24 sert à éliminer plus que 98% de l'éthane, du propane, du propène et du benzène dans le débit 17 se retrouvant dans le non perméat 26.

Dans la Figure 4, le non perméat 19 subit une condensation 15 pour recycler un condensat enrichi en CO₂ 15B vers la compression 13 et les incondensables 15A passent dans une deuxième membrane 24 pour séparer une fraction riche en hydrogène 26 recyclée en amont du PSA et une fraction 25 riche en monoxyde de carbone et méthane qui va aux brûleurs du reformeur 2.

A la Figure 4A, les étapes de traitement 4, 6, 8 et 10 de la Figure 4 sont omises : par contre les étapes 12 à 24 sont illustrées en plus de détail.

Après l'étape d'adsorption dans l'unité 12 produisant de l'hydrogène 16 et un débit 14 appauvri en hydrogène, le débit 14 est comprimé par le compresseur 13A, épuré en eau (cas où le séchage est en aval du PSA) et/ou en méthanol et/ou en benzène dans l'adsorbeur 13C et comprimé de nouveau par le compresseur 13B. Le débit 17 produit par le compresseur 13B est séparé pour produire un débit 20 enrichi en CO₂ et appauvri en au moins un hydrocarbure 20. Le débit 20 est refroidi par le refroidisseur 31, le débit refroidi 33 est partiellement condensé et séparé dans un séparateur de phases 32 dont le gaz 23 est renvoyé à l'adsorption 12. Le liquide 34 est séparé par distillation dans une colonne de distillation 35 pour produire un gaz 36 et un liquide riche en dioxyde de carbone 22. Ce liquide peut contenir 99,8% de dioxyde de carbone au moins, étant de qualité alimentaire.

Le non-perméat 19 du premier système membranaire 8 est envoyé à un échangeur de chaleur 37 pour se condenser partiellement et est séparé dans un séparateur de phases 15. Le gaz formé 15A est réchauffé dans l'échangeur 37 et envoyé à un deuxième système membranaire 24 dont le perméat 25 est envoyé en amont du PSA 12 et le non-perméat 26 est envoyé au reformeur 2.

Le liquide 15B du séparateur de phases 15 est détendu puis vaporisé dans l'échangeur 37 pour être envoyé en amont du compresseur 13B.

## Revendications

1. Procédé pour la production combinée d'hydrogène et de dioxyde de carbone à partir d'un mélange d'hydrocarbures comportant au moins les étapes suivantes :
- une étape (a) de reformage ou d'oxydation partielle du mélange d'hydrocarbures (1) pour l'obtention d'un gaz de synthèse (3) contenant au moins de l'hydrogène, du monoxyde de carbone, du dioxyde de carbone, du méthane, de la vapeur d'eau et au moins l'un des hydrocarbures suivants : éthane, propane, éthylène, propène, benzène, méthanol
- une étape (b) de refroidissement du gaz de synthèse avec récupération de la chaleur disponible,
- une étape (c) de réaction de conversion (en anglais « shift ») de tout ou partie du gaz de synthèse refroidi (5) pour oxyder la majeure partie du monoxyde de carbone en dioxyde de carbone avec production correspondante d'hydrogène et d'un gaz de synthèse enrichi en H₂ et CO₂ et contenant des impuretés dont au moins l'un des hydrocarbures suivants : éthane, propane, éthylène, propène, benzène, méthanol,
- une étape (d) de refroidissement du gaz de synthèse enrichi en H₂ et CO₂ (7) issu de l'étape (c) avec élimination de l'eau condensée,
- une étape (e) facultative de séchage additionnel du gaz de synthèse refroidi pour obtenir un gaz de synthèse sec (11),
- une étape (f) de séparation du gaz de synthèse éventuellement sec (11) dans une unité d'adsorption par modulation de pression (PSA H₂) (12) permettant l'obtention d'un flux H₂ (16) à haute pression enrichi en hydrogène et d'un flux de gaz résiduaire de PSA (14) appauvri en hydrogène contenant au moins du dioxyde de carbone, de l'hydrogène et au moins l'un des hydrocarbures suivants : éthane, propane, éthylène, propène,
- une étape (g) facultative de séchage du flux de gaz résiduaire,
- une étape (h) de séparation par perméation (17) du flux de gaz résiduaire (14) dans un premier système membranaire (8) pour l'obtention d'un perméat (20) appauvri en au moins l'un des hydrocarbures suivants : éthane, propane, éthylène, propène, benzène, méthanol et enrichi en dioxyde de carbone et en hydrogène ainsi qu'un non-perméat (19) enrichi en au moins l'un des hydrocarbures suivants : éthane, propane, éthylène, propène et appauvri en dioxyde de carbone et en hydrogène, le perméat ayant une pression partielle de dioxyde de carbone supérieure à 519 kPa, de préférence supérieure à 1000 kPa,
- une étape (i) de condensation partielle et/ou de distillation dudit perméat pour l'obtention d'un flux liquide riche en CO₂ (22) et d'un flux gazeux résiduaire (23), et dans lequel ce flux gazeux résiduaire (23) est envoyé à l'unité d'adsorption par modulation de pression (12).

2. Procédé selon la revendication 1 dans lequel il n'y a aucune étape de compression du perméat entre les étapes (h) et (i).

3. Procédé selon la revendication 1 ou 2 dans lequel le non-perméat (19) de l'étape (h) est séparé dans un deuxième système membranaire (15, 24).

4. Procédé selon l'une des revendications 1 à 3 dans lequel le non-perméat (19) de l'étape (h) est partiellement condensé.

5. Procédé selon l'une des revendications précédentes dans lequel au moins une partie du non-perméat (19) de l'étape (h) ou un gaz (26) dérivé de ce non-perméat est envoyé à l'étape de reformage ou d'oxydation partielle, comme carburant pour un brûleur de cette étape.

6. Procédé selon l'une des revendications précédentes dans lequel au moins une partie du non-perméat (19) de l'étape (h) ou un gaz (26) dérivé de ce non-perméat est envoyé à l'étape de reformage ou d'oxydation partielle comme gaz d'alimentation.

7. Procédé selon l'une des revendications précédentes dans lequel le premier et/ou deuxième système membranaire (8,15,24) élimine au moins l'un des hydrocarbures suivants : éthane, propane, éthylène, propène, benzène, méthanol de sorte qu'au moins 80%, voire au moins 90% de l'au moins un hydrocarbure alimentant le système membranaire se retrouve dans le non perméat du premier et/ou deuxième système membranaire.

8. Procédé selon l'une des revendications précédentes comprenant une étape de compression dans un compresseur (13B) en amont du premier système membranaire (8).

9. Procédé selon la revendication 8dans lequel un fluide (15B, 25) dérivé du non perméat du premier système membranaire (8) est recyclé en amont du compresseur (13B).

10. Appareil pour la production combinée d'hydrogène et de dioxyde de carbone à partir d'un mélange d'hydrocarbures comportant :
- des moyens de refroidissement (4) d'un gaz de synthèse (3) provenant d'un appareil de reformage ou d'oxydation partielle (2) d'un mélange d'hydrocarbures (1) pour l'obtention du gaz de synthèse contenant au moins de l'hydrogène, du monoxyde de carbone, du dioxyde de carbone, du méthane, de la vapeur d'eau et au moins l'un des hydrocarbures suivants : éthane, propane, éthylène, propène, benzène, méthanol avec récupération de la chaleur disponible,
- un réacteur de conversion (en anglais « shift ») (6, 6b) de tout ou partie du gaz de synthèse refroidi pour oxyder la majeure partie du monoxyde de carbone en dioxyde de carbone avec production correspondante d'hydrogène et d'un gaz de synthèse enrichi en H₂ et CO₂ et contenant des impuretés dont au moins l'un des hydrocarbures suivants : éthane, propane, éthylène, propène, benzène, méthanol,
- des moyens de refroidissement (8) du gaz de synthèse enrichi en H₂ et CO₂ (7) issu de l'étape (c) avec des moyens pour éliminer l'eau condensée,
- des moyens (10) facultatifs de séchage additionnel du gaz de synthèse refroidi pour obtenir un gaz de synthèse sec,
- une unité d'adsorption par modulation de pression (PSA H₂) (12) pour séparer le gaz de synthèse éventuellement sec (11) permettant l'obtention d'un flux H₂ (16) à haute pression enrichi en hydrogène et d'un flux de gaz résiduaire de PSA (14) appauvri en hydrogène contenant au moins du dioxyde de carbone, de l'hydrogène et au moins l'un des hydrocarbures suivants : éthane, propane, éthylène, propène,
- un premier système membranaire (8) pour séparer par perméation du flux de gaz résiduaire (14) pour l'obtention d'un perméat (20) appauvri en au moins l'un des hydrocarbures suivants : éthane, propane, éthylène, propène, benzène, méthanol et enrichi en dioxyde de carbone et en hydrogène ainsi qu'un non-perméat (19) enrichi en au moins l'un des hydrocarbures suivants : éthane, propane, éthylène, propène et appauvri en dioxyde de carbone et en hydrogène, le perméat ayant une pression partielle de dioxyde de carbone supérieure à 519 kPa, de préférence supérieure à 1000 kPa,t
- des moyens de séparation (21) par condensation partielle et/ou distillation dudit perméat pour l'obtention d'un flux liquide riche en CO₂ (22) et d'un flux gazeux résiduaire (23) et
- des moyens pour envoyer le flux gazeux résiduaire (23) à l'unité d'adsorption par modulation de pression (12).

11. Appareil selon la revendication 10 comprenant un deuxième système membranaire (15, 24) dans lequel le non-perméat (19) du premier système membranaire est séparé.

12. Appareil selon la revendication 10 ou 11 comprenant des moyens pour condenser partiellement le non-perméat (19) du premier système membranaire.

13. Appareil selon l'une des revendications précédentes 10 à 12 comprenant des moyens pour envoyer au moins une partie du non-perméat (19) du premier système membranaire ou un gaz (26) dérivé de ce non-perméat à un appareil de reformage ou d'oxydation partielle.

## Patentansprüche

1. Verfahren zur kombinierten Erzeugung von Wasserstoff und Kohlendioxid aus einem Kohlenwasserstoffgemisch, umfassend mindestens die folgenden Schritte:
- einen Schritt (a) der Reformierung oder partiellen Oxidation des Kohlenwasserstoffgemisches (1) zum Erhalten eines Synthesegases (3), das mindestens Wasserstoff, Kohlenmonoxid, Kohlendioxid, Methan, Wasserdampf und mindestens einen der folgenden Kohlenwasserstoffe enthält: Ethan, Propan, Ethylen, Propen, Benzol, Methanol
- einen Schritt (b) des Kühlens des Synthesegases mit Rückgewinnung der verfügbaren Wärme,
- einen Schritt (c) einer Konvertierungsreaktion (im Englischen "Shift"-Reaktion) des gesamten oder eines Teils des gekühlten Synthesegases (5), um den überwiegenden Teil des Kohlenmonoxids zu Kohlendioxid zu oxidieren, mit entsprechender Erzeugung von Wasserstoff und eines Synthesegases, das an H₂ und CO₂ angereichert ist und Verunreinigungen enthält, darunter mindestens einen der folgenden Kohlenwasserstoffe: Ethan, Propan, Ethylen, Propen, Benzol, Methanol,
- einen Schritt (d) des Kühlens des an H₂ und CO₂ angereicherten Synthesegases (7), das aus dem Schritt (c) hervorgegangen ist, mit Eliminierung des kondensierten Wassers,
- einen fakultativen Schritt (e) des zusätzlichen Trocknens des gekühlten Synthesegases, um ein trockenes Synthesegas (11) zu erhalten,
- einen Schritt (f) des Trennens des eventuell trockenen Synthesegases (11) in einer Druckwechseladsorptionseinheit (PSA H₂) (12), der das Erhalten eines an Wasserstoff angereicherten H₂-Stroms (16) mit hohem Druck und einen an Wasserstoff verarmten PSA-Restgasstroms (14) ermöglicht, der mindestens Kohlendioxid, Wasserstoff und mindestens einen der folgenden Kohlenwasserstoffe enthält: Ethan, Propan, Ethylen, Propen,
- einen fakultativen Schritt (g) des Trocknens des Restgasstroms,
- einen Schritt (h) des Trennens durch Permeation des Restgasstroms (17) in einem ersten Membransystem (8) zum Erhalten eines Permeats (20), das an mindestens einem der folgenden Kohlenwasserstoffe verarmt ist: Ethan, Propan, Ethylen, Propen, Benzol, Methanol, und an Kohlendioxid und an Wasserstoff angereichert ist, sowie eines Nichtpermeats (19), das an mindestens einem der folgenden Kohlenwasserstoffe angereichert ist: Ethan, Propan, Ethylen, Propen, und an Kohlendioxid und an Wasserstoff verarmt ist, wobei das Permeat einen Kohlendioxidpartialdruck von mehr als 519 kPa, bevorzugt von mehr als 1000 kPa aufweist,
- einen Schritt (i) der partiellen Kondensation und/oder Destillation des Permeats zum Erhalten eines CO₂-reichen flüssigen Stroms (22) und eines Restgasstroms (23) und bei dem dieser Restgasstrom (23) zu der Druckwechseladsorptionseinheit (12) geleitet wird.

2. Verfahren nach Anspruch 1, bei dem es keinen Schritt der Kompression des Permeats zwischen den Schritten (h) und (i) gibt.

3. Verfahren nach Anspruch 1 oder 2, bei dem das Nichtpermeat (19) des Schritts (h) in einem zweiten Membransystem (15, 24) getrennt wird.

4. Verfahren nach einem der Ansprüche 1 bis 3, bei dem das Nichtpermeat (19) des Schritts (h) teilweise kondensiert wird.

5. Verfahren nach einem der vorhergehenden Ansprüche, bei dem mindestens ein Teil des Nichtpermeats (19) des Schritts (h) oder ein von diesem Nichtpermeat abgeleitetes Gas (26) zum Schritt der Reformierung oder partiellen Oxidation geleitet wird, als Brennstoff für einen Brenner dieses Schritts.

6. Verfahren nach einem der vorhergehenden Ansprüche, bei dem mindestens ein Teil des Nichtpermeats (19) des Schritts (h) oder ein von diesem Nichtpermeat abgeleitetes Gas (26) als Speisegas zum Schritt der Reformierung oder partiellen Oxidation geleitet wird.

7. Verfahren nach einem der vorhergehenden Ansprüche, bei dem das erste und/oder zweite Membransystem (8, 15, 24) mindestens einen der folgenden Kohlenwasserstoffe eliminiert: Ethan, Propan, Ethylen, Propen, Benzol, Methanol, so dass mindestens 80 % oder sogar mindestens 90 % des mindestens einen dem Membransystem zugeführten Kohlenwasserstoffs in dem Nichtpermeat des ersten und/oder zweiten Membransystems vorkommen.

8. Verfahren nach einem der vorhergehenden Ansprüche, umfassend einen Schritt der Kompression in einem Kompressor (13B) stromauf des ersten Membransystems (8).

9. Verfahren nach Anspruch 8, bei dem eine von dem Nichtpermeat des ersten Membransystems (8) abgeleitete Flüssigkeit (15B, 25) stromauf des Kompressors (13B) recycelt wird.

10. Geräts zur kombinierten Erzeugung von Wasserstoff und Kohlendioxid aus einem Kohlenwasserstoffgemisch, umfassend:
- Kühleinrichtungen (4) zum Kühlen eines Synthesegases (3), das aus einem Gerät zur Reformierung oder partiellen Oxidation (2) eines Kohlenwasserstoffgemisches (1) zum Erhalten des Synthesegases stammt, das mindestens Wasserstoff, Kohlenmonoxid, Kohlendioxid, Methan, Wasserdampf und mindestens einen der folgenden Kohlenwasserstoffe enthält: Ethan, Propan, Ethylen, Propen, Benzol, Methanol, mit Rückgewinnung der verfügbaren Wärme,
- einen Konvertierungsreaktor (im Englischen "Shift"-Reaktor) (6, 6b) zur Konvertierung des gesamten oder eines Teils des gekühlten Synthesegases, um den überwiegenden Teil des Kohlenmonoxids zu Kohlendioxid zu oxidieren, mit entsprechender Erzeugung von Wasserstoff und eines Synthesegases, das an H₂ und CO₂ angereichert ist und Verunreinigungen enthält, darunter mindestens einen der folgenden Kohlenwasserstoffe: Ethan, Propan, Ethylen, Propen, Benzol, Methanol,
- Kühleinrichtungen (8) zum Kühlen des an H₂ und CO₂ angereicherten Synthesegases (7), das aus dem Schritt (c) hervorgegangen ist, mit Einrichtungen zum Eliminieren des kondensierten Wassers,
- fakultative Einrichtungen (10) zum zusätzlichen Trocknen des gekühlten Synthesegases, um ein trockenes Synthesegas zu erhalten,
- eine Druckwechseladsorptionseinheit (PSA H₂) (12), um das eventuell trockene Synthesegas (11) zu trennen, was das Erhalten eines an Wasserstoff angereicherten H₂-Stroms (16) mit hohem Druck und eines an Wasserstoff verarmten PSA-Restgasstroms (14) ermöglicht, der mindestens Kohlendioxid, Wasserstoff und mindestens einen der folgenden Kohlenwasserstoffe enthält: Ethan, Propan, Ethylen, Propen,
- ein erstes Membransystem (8), um durch Permeation des Stroms das Restgas (14) zu trennen, zum Erhalten eines Permeats (20), das an mindestens einem der folgenden Kohlenwasserstoffe verarmt ist: Ethan, Propan, Ethylen, Propen, Benzol, Methanol, und an Kohlendioxid und an Wasserstoff angereichert ist, sowie eines Nichtpermeats (19), das an mindestens einem der folgenden Kohlenwasserstoffe angereichert ist: Ethan, Propan, Ethylen, Propen, und an Kohlendioxid und an Wasserstoff verarmt ist, wobei das Permeat einen Kohlendioxidpartialdruck von mehr als 519 kPa, bevorzugt von mehr als 1000 kPa aufweist,
- Trenneinrichtungen (21) zum Trennen durch partielle Kondensation und/oder von Destillation des Permeats zum Erhalten eines CO₂-reichen flüssigen Stroms (22) und eines Restgasstroms (23) und
- Einrichtungen, um den Restgasstrom (23) zu der Druckwechseladsorptionseinheit (12) zu leiten.

11. Gerät nach Anspruch 10, umfassend ein zweites Membransystem (15, 24), in dem das Nichtpermeat (19) des ersten Membransystems getrennt wird.

12. Gerät nach Anspruch 10 oder 11, umfassend Einrichtungen, um das Nichtpermeat (19) des ersten Membransystems partiell zu kondensieren.

13. Gerät nach einem der vorhergehenden Ansprüche 10 bis 12, umfassend Einrichtungen, um mindestens einen Teil des Nichtpermeats (19) des ersten Membransystems oder ein von diesem Nichtpermeat abgeleitetes Gas (26) zu einem Gerät zur Reformierung oder partiellen Oxidation zu leiten.

## Claims

1. Process for the combined production of hydrogen and carbon dioxide from a mixture of hydrocarbons comprising at least the following stages:
- a stage (a) of reforming or of partial oxidation of the mixture of hydrocarbons (1) in order to obtain a synthesis gas (3) containing at least hydrogen, carbon monoxide, carbon dioxide, methane, steam and at least one of the following hydrocarbons: ethane, propane, ethylene, propene, benzene or methanol,
- a stage (b) of cooling the synthesis gas with recovery of the available heat,
- a stage (c) of conversion (shift) reaction of all or part of the cooled synthesis gas (5) in order to oxidize most of the carbon monoxide to give carbon dioxide with corresponding production of hydrogen and of a synthesis gas enriched in H₂ and CO₂ and containing impurities, including at least one of the following hydrocarbons: ethane, propane, ethylene, propene, benzene or methanol,
- a stage (d) of cooling the synthesis gas enriched in H₂ and CO₂ (7) resulting from stage (c) with removal of the condensed water,
- an optional stage (e) of additional drying of the cooled synthesis gas in order to obtain a dry synthesis gas (11),
- a stage (f) of separation of the optionally dry synthesis gas (11) in a pressure swing adsorption (PSA H₂) unit (12), making it possible to obtain a high-pressure H₂ stream (16) enriched in hydrogen and a PSA residual gas stream (14) depleted in hydrogen containing at least carbon dioxide, hydrogen and at least one of the following hydrocarbons: ethane, propane, ethylene or propene,
- an optional stage (g) of drying the residual gas stream,
- a stage (h) of separation by permeation of the stream of the residual gas (17) in a first membrane system (8) in order to obtain a permeate (20) depleted in at least one of the following hydrocarbons: ethane, propane, ethylene, propene, benzene or methanol and enriched in carbon dioxide and in hydrogen, as well as a non-permeate (19) enriched in at least one of the following hydrocarbons: ethane, propane, ethylene or propene and depleted in carbon dioxide and in hydrogen, the permeate having a carbon dioxide partial pressure of greater than 519 kPa, preferably of greater than 1000 kPa,
- a stage (i) of partial condensation and/or of distillation of the said permeate in order to obtain a liquid stream rich in CO₂ (22) and a residual gas stream (23), and
in which this residual gas stream (23) is sent to the pressure swing adsorption unit (12).

2. Process according to Claim 1, in which there is no stage of compression of the permeate between stages (h) and (i).

3. Process according to Claim 1 or 2, in which the non-permeate (19) from stage (h) is separated in a second membrane system (15, 24).

4. Process according to one of Claims 1 to 3, in which the non-permeate (19) from stage (h) is partially condensed.

5. Process according to one of the preceding claims, in which at least a part of the non-permeate (19) from stage (h) or a gas (26) derived from this non-permeate is sent to the reforming or partial oxidation stage, as fuel for a burner of this stage.

6. Process according to one of the preceding claims, in which at least a part of the non-permeate (19) from stage (h) or a gas (26) derived from this non-permeate is sent to the reforming or partial oxidation stage as feed gas.

7. Process according to one of the preceding claims, in which the first and/or second membrane system (8, 15, 24) removes at least one of the following hydrocarbons: ethane, propane, ethylene, propene, benzene or methanol, so that at least 80%, indeed even at least 90%, of the at least one hydrocarbon feeding the membrane system is re-encountered in the non-permeate from the first and/or second membrane system.

8. Process according to one of the preceding claims, comprising a stage of compression in a compressor (13B) upstream of the first membrane system (8).

9. Process according to Claim 8, in which a fluid (15B, 25) derived from the non-permeate from the first membrane system (8) is recycled upstream of the compressor (13B).

10. Apparatus for the combined production of hydrogen and carbon dioxide from a mixture of hydrocarbons comprising:
- means (4) for cooling a synthesis gas (3) originating from an apparatus for the reforming or partial oxidation (2) of a mixture of hydrocarbons (1) in order to obtain the synthesis gas containing at least hydrogen, carbon monoxide, carbon dioxide, methane, steam and at least one of the following hydrocarbons: ethane, propane, ethylene, propene, benzene or methanol, with recovery of the available heat,
- a reactor for conversion (shift) (6, 6b) of all or part of the cooled synthesis gas in order to oxidize most of the carbon monoxide to give carbon dioxide with corresponding production of hydrogen and of a synthesis gas enriched in H₂ and CO₂ and containing impurities, including at least one of the following hydrocarbons: ethane, propane, ethylene, propene, benzene or methanol,
- means for cooling (8) the synthesis gas enriched in H₂ and CO₂ (7) resulting from stage (c) with means for removing the condensed water,
- optional means (10) for additional drying of the cooled synthesis gas in order to obtain a dry synthesis gas,
- a pressure swing adsorption (PSA H₂) unit (12) for separating the optionally dry synthesis gas (11), making it possible to obtain a high-pressure H₂ stream (16) enriched in hydrogen and a PSA residual gas stream (14) depleted in hydrogen containing at least carbon dioxide, hydrogen and at least one of the following hydrocarbons: ethane, propane, ethylene or propene,
- a first membrane system (8) for separating by permeation of the stream the residual gas (14) in order to obtain a permeate (20) depleted in at least one of the following hydrocarbons: ethane, propane, ethylene, propene, benzene or methanol and enriched in carbon dioxide and in hydrogen, as well as a non-permeate (19) enriched in at least one of the following hydrocarbons: ethane, propane, ethylene or propene and depleted in carbon dioxide and in hydrogen, the permeate having a carbon dioxide partial pressure of greater than 519 kPa, preferably of greater than 1000 kPa,
- means (21) for separating by partial condensation and/or of distillation of the said permeate in order to obtain a liquid stream rich in CO₂ (22) and a residual gas stream (23), and
- means for sending the residual gas stream (23) to the pressure swing adsorption unit (12).

11. Apparatus according to Claim 10, comprising a second membrane system (15, 24) in which the non-permeate (19) from the first membrane system is separated.

12. Apparatus according to Claim 10 or 11, comprising means for partially condensing the non-permeate (19) from the first membrane system.

13. Apparatus according to one of the preceding Claims 10 to 12, comprising means for sending at least a part of the non-permeate (19) from the first membrane system or a gas (26) derived from this non-permeate to a reforming or partial oxidation apparatus.
